# EUROPEAN PATENT APPLICATION

(11) **EP 2 134 039 A1**
(43) Date of publication of application: **16.12.2009**
(21) Application number: 09162382.7
(22) Date of filing: 10.06.2009
(51) Int. Cl.: H04L 12/56, H04L 12/40

(54) **System and method for assigning addresses in a network comprising a switch**

(30) Priority: 12.06.2008 EP 08305251
(71) Applicant: THOMSON Licensing, 92100 Boulogne-Billancourt (FR)
(72) Inventor: Kuner, Martin, 78166, DS-Wolterdingen (DE); Lambert, Anne, 78050, VS-Villingen (DE)
(74) Representative: Lindemann, Robert

(57) **Abstract**

A system includes a host device and several client devices, the devices having individual addresses for addressing, and the client devices are connected to the host device via a network and a corresponding switch device. The switch device is adapted to establish point-to-point communication links between the host and the clients. The system is adapted to maintain and update a routing table of all device addresses of devices connected to the switch in the switch device. The client devices initially have identical default addresses, and the system is adapted to individually maintain or release a reset condition for each client device. The system is further adapted to modify the default address of a client device after the reset condition has been released for that device.

## Description

The invention pertains to a system having multiple components that are communicating via a network interface and a switch.

In recent times an increasing number of components in a system are communicating via network interfaces rather than individual point-to-point connections. Network communication requires that each component be equipped with a unique identifier in order to allow for individually addressing each component. Further, network communication may provide for multicast or broadcast addressing, by means of which a plurality or all components in a network can be addressed. Commonly known network identifiers are IP-addresses, or Internet protocol addresses, and MAC-addresses, or media access control addresses, which are very often used in Ethernet-type networks. Typically, network communication is routed via a switch, allowing for transmitting multiple messages between multiple pairs of transmitters and receivers. In this case the switch establishes, for the duration of the message, direct virtual connections between transmitter and receiver. The virtual connections between respective transmitters and receivers are established as required. Switches usually have multiple physical or logical ports to which components in the system can be connected. A switch device typically provides an address table which stores information about addresses that are connected to or can be reached via individual physical or logical ports. When the switch receives a message directed to a certain address it refers to the address table in order to determine the port to which the message is to be directed.

The number of unique device or component addresses is limited depending upon which type of network identifiers is used. Ethernet MAC-addresses, for example, comprise a group of six identification numbers, each of the identification numbers ranging from 0 to 255 in decimal format, or 0 to FF in binary format. Consequently, MAC-addresses provide at most some 281.5 trillion, or 281.5 * 10¹² unique addresses. Given the amount of components or devices that are produced it is evident that even this apparently large address space may not be sufficient at some point in time.

Closed network segments, however, may not require that network identifiers are absolutely unique throughout the whole world. In these closed network segments it may be sufficient that network identifiers are a unique within the closed network. The term closed network segment is used throughout this specification to determine a network that does not communicate with any component outside this network, or, if communication with components outside this network is provided, communication with these components that are outside the closed network segment is routed via a router or bridge, which take care of proper network address translation.

Every component that is to be used within a network requires that a unique network address be set at one point in time. Very often, the components have a non-unique network address which can be changed later on during production. For this purpose usually a non-volatile memory, e.g. a flash-type memory, is provided with the component, which stores the unique network address assigned during production. During or after booting the component retrieves the unique address from the associated flash-type memory and stores it in its internal RAM for using it during operation.

There may be systems comprising a multiplicity of like components, each of the like components initially having the same non-unique network address that needs to be replaced by a unique network address for use within that system. The aforementioned systems may further comprise a switch for switchably connecting the components within the system.

In case each one of the multiplicity of like components has a flash-type memory associated with it, care has to be taken during production of the system that unique network addresses are stored in the non-volatile memory for each and every one of the components. Non-volatile memory, however, adds to the total cost of the system and consumes real estate on a PCB or inside an integrated circuit, or IC. Further, the power consumption may be increased by the additional components.

US 6,629,172 B1 discloses a system for assigning unique addresses to multiple devices attached to an I²C bus. In the known system multiple devices initially share the same I²C address. In order to provide a possibility to address each I²C bus device individually and to assign unique I²C addresses the known system provides that each I²C device keeps the neighbouring I²C device in a reset condition until it has been configured and the host device issues a command to release the reset condition to the next I²C bus device. To this end the reset lines of the I²C devices are daisy chained. The I²C bus structure of the known system does not allow for switched point-to-point communication to be established. Further, daisy chaining of the reset lines does not allow for a flexible reset release sequence.

US 2006/0195639 A1 discloses a system for assigning unique addresses to multiple devices attached to an I²C bus. Each slave includes a processor that runs an I²C address allocation program. The slaves are addressed in a daisy chained manner, and each slave that has been assigned an address triggers the address allocation for the next client. In order to avoid address collisions after start-up, a delay controlling module is provided in each slave.

It is desirable to provide an improved system including a network switch device for establishing point-to-point communication, the system allowing for flexibly replacing non-unique network addresses of the system's components with unique network addresses while dispensing with the need for associating non-volatile memory with each and every one of the system's components.

The system and the method for operating the system presented in the claims and in the following specification provide the desired properties.

A system according to the invention includes a host device and several client devices. The devices have individual addresses for addressing, wherein the client devices are connected to the host device via a network and a corresponding switch device. The switch device is adapted to establish point-to-point communication links between the host and the clients whenever communication is required. The switch device further is adapted to maintain and update a routing table of all devices connected to the switch. In the system according to the invention the client devices initially have identical default addresses, and the system is adapted to individually maintain or release a reset condition for each client device. The system is further adapted to modify the default address of a client device after the reset condition has been released for that device.

In a method for operating the system according to the invention the host device puts all clients devices of the system into a reset state or reset condition. The term reset state or reset condition, as used throughout this specification, corresponds to inactivating at least the function of communication via the network in a client device. It goes without saying that a complete the activation of the device may also be considered a reset condition. Once the reset condition is removed, at least the communication function of the client device is activated.

In order to assign unique individual addresses to client devices of the system the host releases or removes the reset condition for individual client devices of the system, one at a time, maintaining the other client devices still having the default address in a reset condition. The client device that is no longer held in reset condition is now addressed via the switch device, using the default address. It is reminded that the default address may still be identical for multiple of the client devices of the system. However, since only one client device having the default address is available for communication via the network at any time no address conflict occurs. The switch device detects the new device that is available for communication and updates the routing table accordingly. The host device now addresses the client device and assigns a new, unique address to the client device. After the client device has been assigned the new, unique address the switch device updates the routing table again. The updated routing table now contains a valid assignment of ports and device addresses. Then the host device releases or removes the reset condition for the next client device that still uses the default address for addressing. The switch routes the messages and commands from the host to the client devices according to the routing table. The foregoing process is repeated until all client devices of the system have unique network addresses, that is to say until at least all but one client devices have been assigned unambiguous addresses.

In an embodiment of the invention of the switch is adapted to update of the routing table after the address of a connected device has changed.

The system may correspondingly also comprise a switch device that is automatically updating the routing table after a certain time has elapsed, e.g. in a polling manner at regular intervals on. It is also conceivable that the switch updates the routing table in response to physically detecting presence of a client device at a port, for example by sensing signals or signal levels on the bus wires. It is yet also conceivable that the switch updates the routing table only after the host or the client requests the switch to update the routing table. Also, the switch device may only update the routing table in case a client device requests an entry in the routing table of the switch device be made. In this case the client device automatically, at least when a communication is requested by a client for the very first time, issues such a request for updating the routing table. However, it is preferred that a client device issues such a request for updating the routing table whenever its address has been changed, because the time until the routing table is updated and valid may be reduced. There are numerous other events which may cause the switch to update the routing table, which shall not be excluded by the non-limiting list of examples provided above. Updating the routing table includes entirely or partially updating the routing table, i.e. for individual ports of the switch only.

In one embodiment of the method the client device, after the reset condition has been removed, requests the host to assign a modified device address. In this case, default addresses are used for determining source and destination of the communication. In a development of this embodiment the client device comprises a boot loader section that performs the request for assignment of a modified device address. In another development of this embodiment boot loader section of the client device is adapted to request a firmware download.

In a development the client device sends the request for assignment of a modified device address and/or the firmware download as a broadcast message to all devices connected to the same network segment.

In another embodiment of the inventive method the host address is modified, and the modified host address is communicated to the clients within the same network segment.

In one embodiment of the invention individual or suitably grouped reset or enable lines are provided for each client device for maintaining or releasing a reset condition, respectively.

In one embodiment of the invention the device addresses used for uniquely identifying and individually addressing devices of the system are MAC addresses, or Media Access Control addresses, or IP addresses (Internet protocol addresses).

In yet another embodiment of the invention the routing table includes information about physical ports and the respective device addresses of devices connected thereto.

In the following section the invention shall be described with reference to an exemplary embodiment and the attached drawings. In the drawings
- Figure 1: shows a known system; and
- Figure 2: shows a system according to the invention.

In the drawings similar or like components are referred to by the same reference designators.

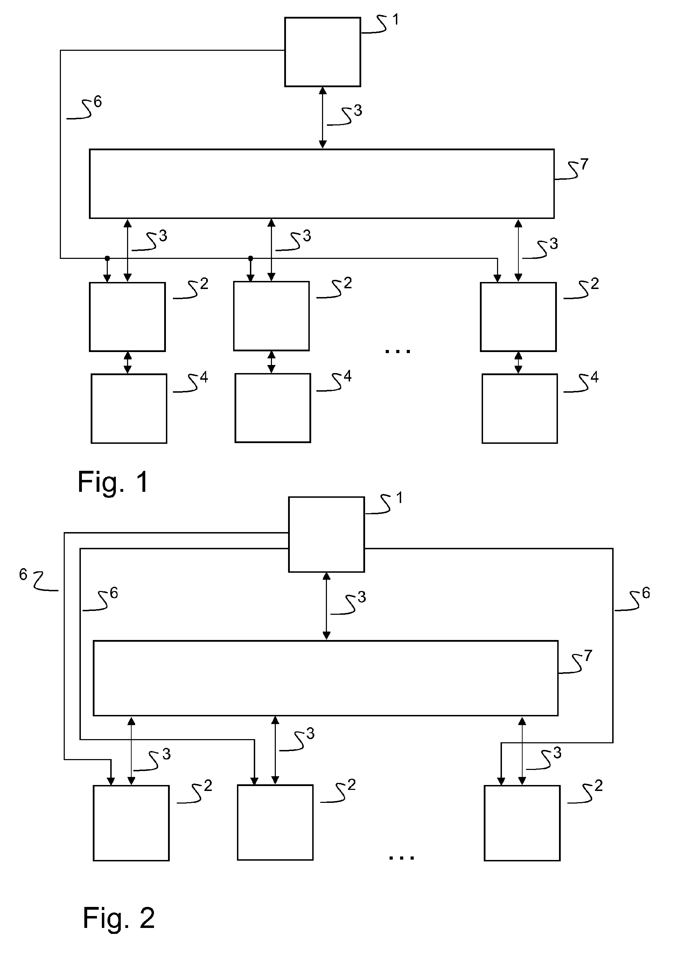

Figure 1 shows a system according to the state of the art in which a host device 1 communicates with a multiplicity of client devices 2 via a network 3, e.g. according to the MII standard, and a switch 7. Put simple, the MII (Medium Independent Interface) interface standard is an Ethernet network protocol transmitted via TTL connections. The client devices 2 in this example are each equipped with a non-volatile memory 4, e.g. of the flash type. The client devices 2 have integrated microprocessors (not shown), which need a firmware to operate. The firmware download is managed by a boot loader integrated on the chip of the client device 2. The integrated boot loader is triggered through a hardware reset, i.e. when the reset condition is removed. The reset condition of the client devices 2 is controlled by the host via a reset line 6. Once the boot loader is triggered each of the client devices 2 sends a request for code download to the host device 1. Since the client devices 2 are each equipped with a non-volatile memory 4 configuration data allowing for establishing communication using unique addresses is already available after the reset condition is removed, and the configuration data is accordingly read from the non-volatile memory 4. Once the host 1 detects such a request for code download the host 1 starts sending the firmware in Ethernet packets to the respective client device 2.

When no non-volatile memory 4 is associated with the client devices 2, no configuration data is available. Since the client devices 2 are not yet configured the request for code download is sent as a broadcast message, e.g. as known from Ethernet broadcast addressing. For this purpose the client devices 2 may use default source and destination addresses, which may be provided in a boot loader of the client devices 2. In the case of no non-volatile memory associated which each client device 2, when multiple client devices 2 of the same kind are connected to the host 1 via a switch 7 and a single reset line 6 is provided for all client devices 2, all of the client devices 2 would request code download almost simultaneously, and, even worse, all of the client devices 2 would use the same default address. In order to prevent this ambiguous situation the host device of the system is adapted to individually maintain or remove a reset condition for each of the client devices. A system of this type is shown in figure 2.

The host 1 is adapted to remove the reset condition for one client device 2 at a time, using individual reset lines 6 for each client device 2. The client device 2, after the reset condition is removed, requests a code download using the default addresses for source and destination. In the case of a broadcast the destination is the stipulated broadcast address, e.g. FF:FF:FF:FF:FF:FF in the case of Ethernet protocol. This request for code download is integrated in the boot loader of the client device 2. Since no other client device 2 that has not yet been configured can communicate on the network 3, the default addresses are unambiguous for this purpose. The host device 1 performs the code or firmware download to the client device 2, using the default address of the client device 2 that was part of the request for code download. In one exemplary embodiment, before the firmware is executed, the MAC addresses can be changed using dedicated commands. Once the firmware is running the MAC addresses cannot be changed any more. It is to be noted that this is not a requirement of the invention, i.e. limiting changes of the MAC addresses to a certain point in time before the firmware is running is not required. After the firmware has been downloaded the host 1 may issue a command to start running the firmware. Further, commands for changing the host address may be issued. Once the client device 2 has been configured and assigned an unambiguous device address the next client device 2 may be configured in the same manner, until all client devices 2 have unambiguous device addresses.

The switch device 3 that is used for coupling the host device 1 to the client devices 2 in the form of switched point-two-point connections needs to maintain updated routing tables of the client devices 2 attached to its ports. Triggering updating of the routing tables has been elucidated further above and is not addressed again.

Throughout this specification the term device address is used in the sense of a device identifier. The term unambiguous is used in the sense of unambiguous within a closed segment of the network. It may be used interchangeably with the term unique. Although, throughout the specification, communication is initiated by a host device it is also possible that client devices initiate a communication. This terminology has rather been chosen to allow for easy understanding of the system and the method, in particular with respect to the initialisation of the system and the following address arbitration. As stated before, once the addresses are assigned is well conceivable that any component of the network may initiate communication via the switch. Consequently, the specification shall not be limited to systems having a dedicated host device and client devices as listeners only.

## Claims

1. System including a host device (1) and several client devices (2), the devices having individual addresses for addressing, wherein the client devices (2) are connected to the host device (1) via a network (3) and a corresponding switch device (7), the switch device (7) being adapted to establish communication links between the host and the clients, the system being adapted to maintain and update a routing table of all device addresses of devices connected to the switch in the switch device (7), wherein the client devices (2) initially have identical default addresses, **characterised in that** the host device (1) is adapted to individually maintain or release a reset condition for each client device (2) independent from the reset condition of other client devices (2), wherein the system is further adapted to modify the default address of a client device (2) after the reset condition has been released for that device.

2. The system of claim 1, wherein reset or enable lines (6) are provided between the host device (1) and each client device (2) for maintaining and releasing a reset condition.

3. The system of claim 1, wherein the client devices (2) are adapted to request assignment of a modified device address after the reset condition has been removed.

4. The system of claim 1, wherein the switch (7) is adapted to update the routing table after the address of a connected device has changed.

5. The system of claim 1, wherein the addresses are MAC addresses, or Media Access Control addresses.

6. The system of claim 1, wherein the routing table includes information about physical ports and the respective device addresses of devices connected thereto.

7. Method for establishing unique device addresses in the system of claim 1 comprising the steps of:
- the host device (1) individually and independently controlling the client devices (2) to maintain a reset condition for all but one of the client devices (2) having identical default addresses;
- the switch device (7) establishing a routing table including the host device (1) and all active client devices (2) connected to the switch;
- the host device (1) addressing a client device (2) that is not maintained in a reset condition and that has the default address, for assigning a modified, unambiguous client device address to this client;
- the switch device (7) updating the routing table, taking into account modified client addresses;
- repeating the preceding steps until all client devices have been assigned an unambiguous device address.

8. The method of claim 7, wherein the client device (2), after the reset condition has been removed, requests the host device (1) to assign a modified device address.

9. The method of claim 7, wherein the client device (2) sends the request as a broadcast message to all devices connected to the same network segment.

10. The method of any one of claims 7 to 9, wherein the host device (1) sends further configuration and/or program data to the client device (2) prior to releasing the reset condition of the next client device.

11. The method of any one of claims 7 to 10, wherein the host address is modified, and the modified host address is communicated to the clients within the same network segment.
